# EUROPÄISCHE PATENTSCHRIFT

(11) **EP 3 750 293 B1**
(45) Veröffentlichungstag und Bekanntmachung des Hinweises auf die Patenterteilung: **14.12.2022**
(21) Anmeldenummer: 19702009.2
(22) Anmeldetag: 15.01.2019
(51) Int. Cl.: H04W 4/38, H04W 4/90, H04W 4/44, H04L 67/12

(54) **WARN-NACHRICHTEN-ROUTING FÜR INFRASTRUKTUREN**
WARNING MESSAGE ROUTING FOR INFRASTRUCTURES
ROUTAGE DE MESSAGES D'AVERTISSEMENT POUR INFRASTRUCTURES

(30) Priorität: 09.02.2018 DE 102018202036
(43) Veröffentlichungstag der Anmeldung: 16.12.2020
(73) Patentinhaber: Siemens Schweiz AG, 8047 Zürich (CH)
(72) Erfinder: LAIS, Christian, 8912 Obfelden (CH); ZECHLIN, Oliver, 6300 Zug (CH)
(74) Vertreter: Maier, Daniel Oliver
(86) Internationale Anmeldenummer: PCT/EP2019/050943
(87) Internationale Veröffentlichungsnummer: WO 2019/154597

(56) Entgegenhaltungen:
- WO-A1-2011/140592
- DE-A1-102013 213 583
- US-A1- 2012 193 110
- US-A1- 2017 178 520
- US-B1- 9 852 599

## Beschreibung

Die Erfindung betrifft ein Infrastrukturmanagementsystem und ein entsprechendes Verfahren zum Erkennen von Gefährdungspotentialen innerhalb einer Infrastruktur oder für eine Infrastruktur. Weiterhin betrifft die Erfindung ein Gateway zum Empfangen von Sensorwerten und Meldungen.

Infrastrukturen, insbesondere sog. "Kritische Infrastrukturen" (z.B. Tunnel, Fabrikanlagen mit Gefahrenstoffen, Wasserwerke, Fähren), müssen auf vielfältige Gefahrenhinweise reagieren, um Schaden abzuwenden und Risiken zu minimieren. Technisch bedingt ändert bzw. erhöht sich die Art der Gefahren über die Zeit.

Gewerbliche Bauten oder Areale sowie Infrastruktureinrichtungen werden meist durch z.B. Brandmeldeanlagen oder auch Zutrittskontroll- und Perimeterschutzeinrichtungen vor Gefahren geschützt. Als Beispiel sind Tunnelanlagen genannt: bei gut geschützten Anlagen werden heranfahrende LKWs mittels Thermobildkameras oder ähnlichen Sensoren "gescanned", um vor Einfahrt in den Tunnel erkennen zu können, ob von diesen bzw. von deren technischen Bauteilen wie Bremsanlage oder Verbrennungsmotor eine Gefahr ausgeht. Sollten z.B. die Bremsanlage thermische Unregelmäßigkeiten aufweisen, kann der LKW noch vor Einfahrt in den Tunnel (d.h. der kritischen Infrastruktur) gestoppt werden, um dort einen Unfall und Brand zu verhindern. Im Allgemeinen erkennen vor Ort zur Infrastruktur gehörende und entsprechend verbaute Sensoren eine Gefahr bzw. die von Sensoren erfassten Daten oder Sensorwerte können für eine Gefahrenerkennung ausgewertet werden. Die sensorische Information wird ausgewertet und u. U. darauf reagiert. Aus der europäischen Patentanmeldung EP1060766A1 ist eine Einrichtung zur sog. Hot-Spot-Detektion bekannt, um Heissläufer an Fahrwerken von Zügen vor Einfahrt in einen Tunnel zu erkennen.

Die deutsche Patentanmeldung DE102013213583A1_offenbart ein System zur Assistenz in einem Tunnel, insbesondere in einem Straßen-tunnel, wobei das Assistenzsystem aufweist: Eine Sensorvorrichtung, eine Kontrollvorrichtung und eine Tunnelvorrichtung, wobei die Sensorvorrichtung eingerichtet ist, erhaltene Sensordaten an die Kontroll-vorrichtung zu übermitteln. Die Kontrollvorrichtung ist eingerichtet, Sensordaten der Sensorvorrichtung entgegenzunehmen und auszuwerten, und basierend auf den ausgewerteten Sensordaten zu bestimmen, ob eine Koordinationssituation vorliegt. In dem Fall, in welchem eine Koordinationssituation vorliegt, ist das System eingerichtet, um basierend auf der Koordinationssituation und eines im Tunnel befindlichen Fahrzeuges, eine Handlungsanweisung für das Fahrzeug zu bestimmen, und die Handlungsanweisung, mittels einer zu dem Fahrzeug einrichtbaren funktechnischen Verbindung, an das Fahrzeug zu übermitteln.

Die amerikanische Patentanmeldung US20120193110A1 offenbart ein Verfahren und eine Anordnung zur Kontrolle eines Zugbrandes in einem langen Eisenbahn-tunnel, wobei Züge bei der Vorbeifahrt an Brandmeldern (Flammen, Rauch, CO) erkannt werden, und wenn ein Feuer in einem Zug erkannt wird, wird ein gesendete Feuersignal überwacht, und der Fahrer des detektierten Zuges wird angewiesen, mit einer Sicherheitsgeschwindigkeit zu fahren, die den Brand stabilisiert.

Die internationale Patentanmeldung WO2011140592A1 offenbart ein Verfahren zur drahtlosen Fahrzeugkommunikation, welches von einer Onboard-Ausrüstung (OBE) eines Fahrzeugs durchführbar ist, wobei vom Fahrzeug eine Nachricht über eine Eigenschaft des Fahrzeugs empfangen wird, wobei an den Fahrer des Fahrzeugs eine Warnung ausgegeben wird, wenn die Eigenschaft des Fahrzeugs nicht mit einer vorbestimmten Anforderung einer Infrastruktur übereinstimmt, und wobei in die Steuerung des Fahrzeugs eingegriffen wird, wenn eine empfohlene Maßnahme vom Fahrer nicht ergriffen wird oder wenn das Fahrzeug sich innerhalb einer vorbestimmten Entfernung von der Infrastruktur befindet.

Die amerikanische Patentanmeldung US20170178520A1 offenbart Systeme und Verfahren zur Vermeidung von Fahrzeugkollisionen am Boden unter Verwendung gemeinsamer Fahrzeuggefahrensensordaten.

Die amerikanische Patentschrift US9852599B1 offenbart ein System zum Übertragen von Mitteilungen an einen Benutzer, wenn bestimmte Typen von Sicherheitsvorfälle für den Benutzer anzeigt sind. Dies basiert auf Sensordaten von einer Vielzahl von Sicherheitsgeräten.

Diese Arten der Gefahrenerkennung sind statisch, auf sich verändernde Gefahren oder Gefahrenpotentiale kann nicht flexibel reagiert werden.

Es ist daher die Aufgabe der vorliegenden Erfindung, ein kostengünstiges System und Verfahren bereitzustellen, mit denen insbesondere über die Zeit sich verändernde Gefahren oder Gefahrenpotentiale innerhalb einer Infrastruktur oder für eine Infrastruktur, flexibel und sicher erkannt werden.

Die Aufgabe wird gelöst durch ein System, ein Gateway und ein Verfahren wie definiert in den unabhängigen Ansprüche 1, 7 bzw. 9. Vorteilhafte Ausgestaltungen werden in den abhängigen Ansprüche definiert.

Eine erste vorteilhafte Ausgestaltung der Erfindung liegt darin, dass die mobilen Geräte (z.B. Kraftfahrzeug, Zug, mobiles Kommunikationsendgerät (z.B. Smartphone)) eingerichtet sind, dass sie sich automatisch mit dem Gateway verbinden, wenn sie sich innerhalb der Infrastruktur oder innerhalb einer definierten Entfernung zur Infrastruktur befinden, z.B. in einem definierten Radius um die Infrastruktur oder in einem definierten Abstand zu einer Einfahrt in die Infrastruktur. Ein beispielhafter Radius bzw. Abstand kann z.B. 300m sein. Die mobilen Geräte können z.B. beim Infrastrukturbetreiber oder bei einem Webportal des Infrastrukturbetreibers registriert sein. Mit Vorteil befindet sich im definierten Radius bzw. im definierten Abstand auf dem Weg zur Einfahrt in die Infrastruktur ein Funknetz (z.B. WLAN, Bluetooth), in welches sich die mobilen Geräte bei entsprechender Nähe automatisch einwählen. Die Verbindung der jeweiligen mobilen Geräte mit dem Gateway erfolgt automatisch, ohne dass die Besitzer der entsprechenden mobilen Geräte interagieren müssen.

Eine weitere vorteilhafte Ausgestaltung der Erfindung liegt darin, dass die mobilen Geräte sich erst nach einer geräteseitig erfolgten Bestätigung (z.B. confirmation) mit dem Gateway verbinden. In dieser Ausgestaltung wird sichergestellt, dass das Verbinden der mobilen Geräte mit dem Gateway nur erfolgt, wenn der Besitzer vorher zugestimmt hat.

Eine weitere vorteilhafte Ausgestaltung der Erfindung liegt darin, dass eine Verbindung zwischen Gateway (Schnittstelle) und einem mobilen Gerät erst nach einer Bestätigung (confirmation) durch das Gateway erfolgt. In dieser Ausgestaltung kann der Betreiber der Infrastruktur selektiv mobile Geräte auswählen, deren Sensorik er einbinden bzw. verwenden möchte.

Eine weitere vorteilhafte Ausgestaltung der Erfindung liegt darin, dass es sich bei der Infrastruktur um einen Tunnel, ein Parkhaus, eine Tiefgarage, eine Parkgarage, einen Campus, oder eine Fähre handelt. Das erfindungsgemässe Infrastrukturmanagementsystem zum Erkennen von Gefährdungspotentialen ist flexibel für Infrastrukturen verwendbar, in denen sich Fahrzeuge oder Menschen mit mobilen Kommunikationsendgeräten (z.B. Smartphone) temporär befinden.

Eine weitere vorteilhafte Ausgestaltung der Erfindung liegt darin, dass es sich bei dem mobilen Gerät um ein Fahrzeug (z.B. Zug, Auto, LKW) handelt. Fahrzeuge enthalten üblicherweise als Sensoren z.B. Kameras oder Temperatursensoren. Zugwaggons sind üblicherweise mit Rauch- und/oder Brandmeldern ausgestattet. Mit Vorteil wird diese Sensorik zum Erkennen von Gefährdungspotentialen innerhalb der Infrastruktur oder für die Infrastruktur verwendet.

Eine weitere vorteilhafte Ausgestaltung der Erfindung liegt darin, dass es sich bei dem mobilen Gerät um ein mobiles Kommunikationsendgerät (z.B. Smartphone) handelt. Mobile Kommunikationsendgeräte sind mit Sensorik (z.B. GPS, Bewegungssensoren, Kamera, Barometer, Temperatursensor) ausgestattet, die zum Erkennen von Gefährdungspotentialen innerhalb der Infrastruktur oder für die Infrastruktur verwendet werden können. Weiterhin können über ein mobiles Kommunikationsendgerät Meldungen über Gefahren oder Gefährdungen via Sprach oder Textnachricht an das Gateway des Infrastrukturmanagementsystems gesendet werden.

Eine weitere vorteilhafte Ausgestaltung der Erfindung liegt darin, dass das Gateway dazu eingerichtet ist, Meldungen von einem Vehicle-to-Vehicle-Server und/oder von einem Verkehrsleitrechner zu empfangen, und dass die Verarbeitungseinheit (Server) dazu eingerichtet ist, die vom Vehicle-to-Vehicle-Server oder vom Verkehrsleitrechner empfangenen Meldungen bei der Analyse des Gefährdungspotentials für die Infrastruktur oder innerhalb der Infrastruktur zu verwenden oder zu berücksichtigen. Dadurch können zum Erkennen von Gefährdungspotentialen für eine Infrastruktur (z.B. Tunnel) weitere Informationen verwendet werden. Vehicle-to-Vehicle-Kommunikation oder car-to-car-Kommunikation wird immer verbreiteter. Die Informationen (z.B. Meldungen) aus einem kollaborativen Fahrzeugverbund können durch einen Vehicle-to-Vehicle-Server, mit dem die Fahrzeuge entsprechend datentechnisch verbunden sind, dem Gateway gemeldet werden oder von einzelnen Fahrzeugen. Verkehrsleitrechner können weitere Informationen an das Gateway oder direkt an die Verarbeitungseinheit melden (z.B. Benachrichtigung über ein hohes Verkehrsaufkommen auf Zufahrtswegen zur Infrastruktur oder Meldungen über einen sich auf den Zufahrtswegen zur Infrastruktur befindlichen Schwertransport oder Gefahrenguttransport). Mit Vorteil werden auch Wetterinformationen (insbesondere Wettervorhersagen über den räumlichen Bereich, in dem sich die betreffende Infrastruktur befindet) von Wetterwarten oder Wetterdiensten an das Gateway oder direkt an die Verarbeitungseinheit gemeldet und für die Bestimmung des Gefährdungspotentials für die Infrastruktur verwendet.

Eine weitere vorteilhafte Ausgestaltung der Erfindung liegt in einem Gateway (Schnittstelle), eingerichtet zum Empfangen von Sensorwerten, die von Sensoren mobiler Geräte stammen, die sich temporär innerhalb einer Infrastruktur oder innerhalb einer definierten Entfernung (Radius) zur Infrastruktur befinden; und weiter eingerichtet zum Weiterleiten der empfangenen Sensorwerte an eine Verarbeitungseinheit. Bei den mobilen Geräten handelt es sich z.B. um Fahrzeuge (z.B. Kraftfahrzeuge, Züge) aber auch um mobile Kommunikationsendgeräte (z.B. Smartphone) z.B. von Insassen der Fahrzeuge. Die mobilen Geräte umfassen Sensorik, z.B. Kameras, Züge üblicherweise auch Rauch-, Brand-, und Temperaturmelder. Mit Vorteil umfasst das Gateway eine Funkschnittstelle (z.B. GMS, WLAN, Internethot-spots), über die von der jeweiligen Sensorik erfassten jeweiligen Sensorwerte an das Gateway übermittelt werden können. Mit Vorteil erfolgt die Kommunikationsverbindung zwischen der Sensorik und dem Gateway automatisch (z.B. durch ein definiertes Kommunikationsprotokoll), wenn sich die Sensorik bzw. das mobile Gerät innerhalb eines definierten Abstands zur Infrastruktur befinden. Die Sensorwerte, die von der in der Infrastruktur verbauten Sensorik oder von der dediziert zur Infrastruktur gehörenden Sensorik stammen, können drahtlos (z.B. über eine Funkverbindung) oder drahtgebunden (d.h. durch entsprechende Verkabelung) an das Gateway geleitet werden.

Eine weitere vorteilhafte Ausgestaltung der Erfindung liegt darin, dass das Gateway eingerichtet ist, Meldungen von einem Vehicle-to-Vehicle-Server und/oder von einem Verkehrsleitrechner zu empfangen und an die Verarbeitungseinheit weiterzuleiten. Dadurch können zum Erkennen von Gefährdungspotentialen für eine Infrastruktur (z.B. Tunnel) weitere Informationen verwendet werden.

Die Aufgabe wird weiterhin gelöst durch ein Verfahren zum Erkennen von Gefährdungspotentialen innerhalb einer Infrastruktur (z.B. Tunnel, Parkhaus, Fähre) oder für eine Infrastruktur, das Verfahren umfassend:
Bereitstellen von ersten Sensorwerten von einer für die Infrastruktur dedizierten (statischen, verbauten) Sensorik;
Bereitstellen von zweiten Sensorwerten von mobilen Geräten, die sich temporär innerhalb der Infrastruktur oder innerhalb einer definierten Entfernung (Radius) zur Infrastruktur befinden; und
Analysieren der ersten und der zweiten Sensorwerte um Gefährdungspotentiale für die Infrastruktur oder innerhalb der Infrastruktur zu erkennen. Zum Erkennen von Gefährdungspotentialen für eine Infrastruktur wird die in der Infrastruktur vorhandene Sensorik (in einem Tunnel z.B. verbaute Brandmelder oder installierte Kameras) durch Sensorik erweitert, die sich temporär in der Infrastruktur oder in einem Bereich um die Infrastruktur befindet.

Eine weitere vorteilhafte Ausgestaltung der Erfindung liegt darin, dass die zweiten Sensorwerte von einem Fahrzeug und/oder von einem mobilen Kommunikationsendgerät bereitgestellt werden.

Bei den mobilen Geräten handelt es sich z.B. um Fahrzeuge (z.B. Kraftfahrzeuge, Züge) aber auch um mobile Kommunikationsendgeräte (z.B. Smartphone), z.B. von Insassen der Fahrzeuge. Bei den mobilen Geräten handelt es sich z.B. um Fahrzeuge (z.B. Kraftfahrzeuge, Züge), aber auch um mobile Kommunikationsendgeräte (z.B. Smartphone) z.B. von Insassen der Fahrzeuge. Die mobilen Geräte umfassen Sensorik, z.B. Kameras, Züge üblicherweise auch Rauch-, Brand-, und Temperaturmelder.

Eine weitere vorteilhafte Ausgestaltung der Erfindung liegt darin, dass zum Erkennen von Gefährdungspotentialen für die Infrastruktur oder innerhalb der Infrastruktur auch Meldungen verwendet oder berücksichtigt werden, die von einem Vehicle-to-Vehicle-Server und/oder von einem Verkehrsleitrechner bereitgestellt werden.

Dadurch können zum Erkennen von Gefährdungspotentialen für eine Infrastruktur (z.B. Tunnel) weitere Informationen verwendet werden.

Eine weitere vorteilhafte Ausgestaltung der Erfindung liegt darin, dass zur Erkennung von Gefährdungspotentiale für die Infrastruktur oder innerhalb der Infrastruktur auch Meldungen verwendet oder berücksichtigt werden, die von einem mobilen Gerät (Fahrzeug) bereitgestellt werden, welches mit anderen mobilen Geräten (Fahrzeugen) vernetzt ist. Fahrzeuge können unter sich kommunizieren (Vehicle-2-Vehicle-Kommunikation) und Gefährdungsstufe austauschen und diese Information dem Gateway oder direkt der Verarbeitungseinheit (insbesondere direkt dem Computer der Verabeitungseinheit) bereitstellen. Dies kann über einen Vehicle-2-Vehicle-Server (V2V-Server) oder durch eines der verbundenen Fahrzeuge (Mesh-Netzwerk der Fahrzeuge) erfolgen. Mit Vorteil werden dem Gateway bzw. der Verarbeitungseinheit über eine übergeordnete Leitstelle (z.B. Verkehrsleitrechner) weitere Meldungen, die für die Bestimmung des Gefährdungspotentials für eine Infrastruktur interessant sein können, mitgeteilt (z.B. Annäherung eines LKW mit Gefahrengütern). Mit Vorteil werden von einem Wetterdienstleister auch Wetterinformationen geliefert mit Bezug zur betreffenden Infrastruktur geliefert, die für die Bestimmung des Gefährdungspotentials berücksichtigt werden.

Wenn von der Verarbeitungseinheit ein Gefährdungspotential oder eine vorhandene Gefahr (z.B. Brand) für die Infrastruktur erkannt wird, wird mit Vorteil von der Verarbeitungseinheit eine entsprechende Aktion ausgelöst (z.B. Ampel auf "Rot" stellen oder Schliessen einer Schranke, um die die Zufahrt zur Infrastruktur zu verhindern; oder Alarmierung der Feuerwehr) und/oder eine entsprechende Warnmeldung ausgegeben. Die Warnmeldung kann z.B. auf Anzeigetafeln an den Zufahrtswegen zur Infrastruktur angezeigt werden.

Die Erfindung sowie vorteilhafte Ausführungen der vorliegenden Erfindung werden am Beispiel der nachfolgenden Figuren erläutert. Dabei zeigen:
- FIG 1: ein erstes beispielhaftes Infrastrukturmanagement-system zum Erkennen von Gefährdungspotentialen innerhalb einer Infrastruktur oder für eine Infrastruktur,
- FIG 2: ein zweites beispielhaftes Infrastrukturmanagement-system zum Erkennen von Gefährdungspotentialen innerhalb einer Infrastruktur oder für eine Infrastruktur, und
- FIG 3: ein beispielhaftes Flussdiagramm für ein Verfahren zum Erkennen von Gefährdungspotentialen innerhalb einer Infrastruktur oder für eine Infrastruktur.

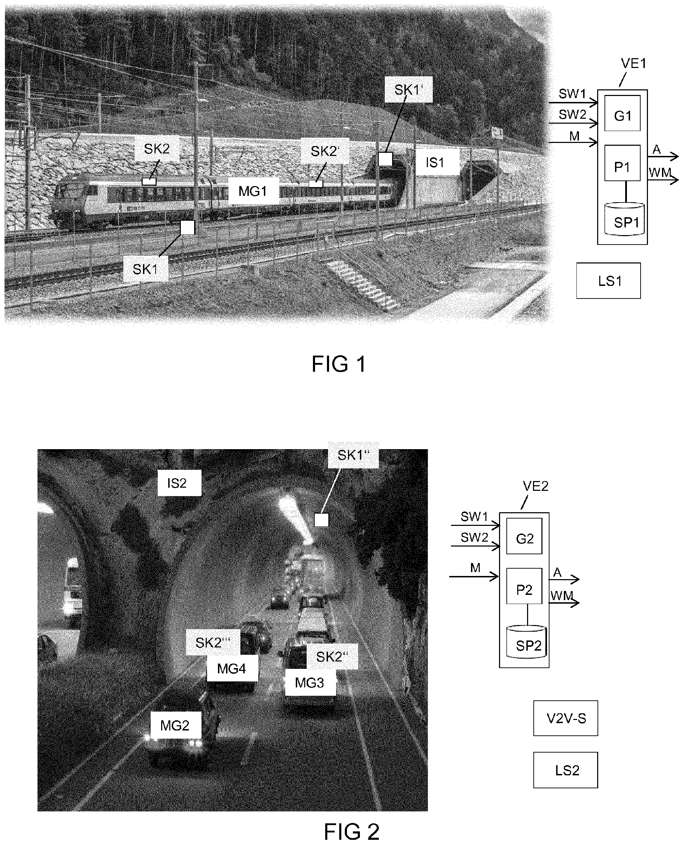

Figur 1 zeigt ein erstes beispielhaftes Infrastrukturmanagementsystem zum Erkennen von Gefährdungspotentialen innerhalb einer Infrastruktur IS1 oder für eine Infrastruktur IS1. Bei der Infrastruktur IS1 handelt es sich z.B. um einen Tunnel, eine Parkgarage (Parkhaus, Tiefgarage) oder um eine Fähre, insbesondere geeignet zum Transportieren von Fahrzeugen (Kraftfahrzeuge, Zuge). Das erste beispielhafte Infrastrukturmanagementsystem umfasst:
- eine dedizierte (z.B. statische, in der Infrastruktur verbaute oder angebrachte) Sensorik SK1, SK1' zum Erkennen von Gefährdungspotentialen innerhalb der Infrastruktur IS1 oder für die Infrastruktur IS1;
- ein Gateway G1 (z.B. Schnittstelle), eingerichtet zum Empfangen von Sensorwerten SW2, die von Sensoren SK2, SK2' mobiler Geräte MG1 stammen, die sich temporär innerhalb der Infrastruktur IS oder innerhalb einer definierten Entfernung (z.B. innerhalb eines definierten Radius, oder innerhalb eines definierten Abstandes) zur Infrastruktur IS befinden;
- eine Verarbeitungseinheit VE1 (z.B. entsprechend eingerichteter Server), eingerichtet zum Empfangen der von der dedizierten Sensorik SK1, SK1' gemeldeten Sensorwerte SW1, und eingerichtet zum Empfangen der vom Gateway G1 bereitgestellten Sensorwerte SW2 der mobilen Geräte MG1, und weiter eingerichtet zur Analyse der empfangenen Sensorwerte SW1, SW2, um Gefährdungspotentiale für die Infrastruktur IS1 oder innerhalb der Infrastruktur IS1 zu erkennen.

Bei der Darstellung gemäss Figur 1 handelt es sich beim mobilen Gerät MG1 um einen Zug und bei der Infrastruktur IS1 um einen Tunnel, in den der Zug MG1 einfährt. Der Zug MG1 um fasst eine eigene Sensorik SK2, SK2', z.B. Rauch und/ oder Brandmelder, die sich in den Waggons des Zuges MG1 befinden. Sobald die Brandmelder SK2, SK2' des Zuges MG1 in die Nähe der Infrastruktur IS1 (d.h. des Tunnels) gelangen, werden die Brandmelder SK2, SK2' des Zuges MG1 in die Sicherheitsinfrastruktur des Tunnels IS1 mit eingebunden. D.h. auch die von den Brandmeldern SK2, SK2' des Zuges MG1 gelieferten Sensorwerte SW2 werden zum Erkennen von Gefährdungspotentialen für die Infrastruktur IS1 verwendet.

Über ein entsprechend eingerichtetes Gateway G1 (z.B. entsprechend eingerichtete Funkschnittstelle) können die von den Brandmeldern SK2, SK2' des Zuges MG1 gelieferten Sensorwerte SW2 empfangen und an die Verarbeitungseinheit VE1 des Infrastrukturmanagementsystems (z.B. eine Leitwarte für die Überwachung der Infrastruktur des Tunnels IS1) weitergeleitet werden. Auch die Sensorwerte SW1, die von einer zur Infrastruktur IS1 dedizierten Sensorik SK1, SK1' stammen, können über das Gateway G1 empfangen und an die Verarbeitungseinheit VE1 zur Verarbeitung und Analyse weitergeleitet werden. Die dedizierte Sensorik SK1, SK1' ist im Tunnel fest verbaut oder dediziert für den Tunnel angebracht. Bei der Sensorik SK1, SK1' kann es sich zum Beispiel um eine bei der Tunneleinfahrt montierte Kamera SK1 handeln oder um im Tunnel IS1 angebrachte Brandmelder SK1'. Optional können auch von einer übergeordneten Leitstelle LS1 (z.B. Verkehrsleitstelle) Meldungen M (z.B. eine Meldung über einen sich nähernden Gefahrentransport) für die Verarbeitungseinheit VE1 des Infrastrukturmanagementsystems bereitgestellt werden, die auch für die Bestimmung des Gefährdungspotentials für den Tunnel IS1 verwendet werden können.

Die Verarbeitungseinheit VE1 (z.B. ein entsprechend eingerichteter Server, mit Prozessor P1 und Speicher SP1) ist eingerichtet zum Empfangen der von der dedizierten Sensorik SK1, SK1' gemeldeten Sensorwerte SW1, und eingerichtet zum Empfangen der vom Gateway G1 bereitgestellten Sensorwerte SW2 der mobilen Geräte MG1, und weiter eingerichtet zur Analyse der empfangenen Sensorwerte SW1, SW2, um Gefährdungspotentiale für die Infrastruktur IS1 (z.B. den in Figur 1 dargestellten Tunnel) oder innerhalb der Infrastruktur IS1 zu erkennen.

Mit Vorteil umfasst die Verarbeitungseinheit VE1 entsprechend eingerichtete Hardware und Software, um Methoden der künstlichen Intelligenz (z.B. Entscheidungstabellen, Erfahrungsdatenbank, neuronale Modelle oder Netze, selbstlernende Systeme, Deep Learning) zu verwenden, um Gefahren oder Gefährdungspotentiale für den Tunnel möglichst schnell zu erkennen und entsprechende Massnahmen (mit Vorteil vorbeugende Massnahmen) einzuleiten. Bei den von der Verarbeitungseinheit VE1 eingeleiteten Massnahmen kann es sich um Aktionen A (z.B. Sperrung der Tunnelzufahrt; Benachrichtigung der Polizei bzw. Benachrichtigung von Sicherheitsorganen) und/oder um Warnmeldungen WM (z.B. Anzeige von einer Warn- oder Gefahrenmeldung auf einem Display an der Tunneleinfahrt) handeln. Mit Vorteil werden die Aktionen A und/oder die Warnmeldungen WM eingeleitet bzw. ausgegeben.

Mit Vorteil ist der Zug MG1 bzw. die im Zug MG1 befindliche Sensorik SK2, SK2' eingerichtet, sich automatisch mit dem Gateway G1 zu verbinden, wenn der Zug MG1 sich innerhalb der Infrastruktur IS1 oder innerhalb einer definierten Entfernung (z.B. Radius oder Abstand) zur Infrastruktur IS1 befindet. Beim Radius oder beim Abstand kann es sich z.B. um 300m handeln.

Mit Vorteil ist der Zug MG1 bzw. die im Zug MG1 befindliche Sensorik SK2, SK2' eingerichtet, sich erst nach einer zugseitig erfolgten Bestätigung (confirmation) mit dem Gateway G1 zu verbinden. Die Bestätigung (confirmation) kann z.B. durch den Zugführer oder den Schaffner erfolgen.

Optional erfolgt eine Verbindung zwischen Gateway G1 (Schnittstelle) und dem Zug MG1 erst nach einer Bestätigung (confirmation) durch das Gateway G1 bzw. durch das Infrastrukturmanagementsystem. So kann das Infrastrukturmanagementsystem selektiv auswählen, von welchen Zügen oder Zugtypen die Sensorik SK2, SK2' eingebunden werden soll zur Bestimmung der Gefahrenpotentiale.

Bei der Infrastruktur IS1 kann es sich um einen Tunnel, ein Parkhaus, eine Tiefgarage, eine Parkgarage, einen Parkplatz oder eine Fähre handeln.

Bei dem mobilen Gerät MG1 kann es sich um ein Fahrzeug (Zug, Auto, LKW) ausgestattet mit entsprechender Sensorik SK2, SK2' handeln.

Optional kann es sich bei dem mobilen Gerät MG1 um ein mobiles Kommunikationsendgerät (z.B. Smartphone) handeln. Mobile Kommunikationsendgeräte sind mit Sensorik (z.B. GPS, Bewegungssensoren, Kamera, Barometer, Temperatursensor) ausgestattet, die zum Erkennen von Gefährdungspotentialen innerhalb der Infrastruktur IS1 oder für die Infrastruktur IS1 verwendet werden können. Weiterhin können über ein mobiles Kommunikationsendgerät Meldungen über Gefahren oder Gefährdungen via Sprach oder Textnachricht an das Gateway des Infrastrukturmanagementsystems gesendet werden.

Mit Vorteil ist das Gateway G1 dazu eingerichtet, Meldungen M von einem Vehicle-to-Vehicle-Server und/oder von einem Verkehrsleitrechner LS1 zu empfangen, und die Verarbeitungseinheit VE1 ist dazu eingerichtet, die vom Vehicle-to-Vehicle-Server oder vom Verkehrsleitrechner LS1 empfangenen Meldungen bei der Analyse des Gefährdungspotentials für die Infrastruktur IS1 oder innerhalb der Infrastruktur IS1 zu verwenden.

Mit Vorteil ist das Gateway G1 (z.B. Funkschnittstelle mit entsprechender Software) eingerichtet zum Empfangen von Sensorwerten SW2, die von Sensoren mobiler Geräte MG1 (z.B. ein Zug) stammen, die sich temporär innerhalb der Infrastruktur IS1 (z.B. Tunnel) oder innerhalb einer definierten Entfernung (z.B. Radius) zur Infrastruktur IS1 befinden; und weiter eingerichtet zum Weiterleiten der empfangenen Sensorwerte SW2 an die Verarbeitungseinheit VE1, zum Analysieren der Sensorwerte SW2 und SW1 um Gefährdungspotential für die Infrastruktur IS1 zu erkennen.

Mit Vorteil ist das Gateway G1 weiter eingerichtet, Meldungen von einem Vehicle-to-Vehicle-Server (VSV-S; siehe Figur 2) und/oder von einem Verkehrsleitrechner LS1 zu empfangen und an die Verarbeitungseinheit VE1 weiterzuleiten.

Zum Tunnel IS1 gehörende dedizierte Sensorik kann auch auf den Zufahrtswegen zum Tunnel (bei einem Eisenbahntunnel an den Schienen, die zum Tunnel führen) angebracht sein, z.B. für die Überwachung des Fahrwerks der Züge auf Heissläufer. Dies erfolgt durch eine sogenannte Hot-Spot-Detektion, mit der auch verdeckte Brände oder fehlerhafte elektrische Komponenten am Zug MG1 zumindest teilweise miterfasst werden. Diese Hot-Spot-Detektion kann z.B. mit Infrarot-Kameras realisiert werden, die den durch den sich nähernden Zug MG1 betrachten, mit Vorteil von links und rechts und von oben. Die von den Infrarot-Kameras gelieferten Sensorwerte SW1 und Sensorwerte SW2, die z.B. von Temperaturfühler im Zug MG1 geliefert werden, werden von der Verarbeitungseinheit VE1 analysiert und bezüglich eines durch den sich nährenden Zuges eventuell vorhandenen Gefährdungspotential bewertet. Durch die Verwendung von Sensorwerten ausserhalb und innerhalb des Zuges MG1 kann die Gefährdungsquelle genauer lokalisiert werden, das Gefährdungspotential besser eingeschätzt und bewertet werden und von der Verarbeitungseinheit VE1 zielgereichter durch entsprechende Aktionen A bzw. Warnmeldungen WM reagiert werden. Mit Vorteil werden Warnmeldungen WM auch im Zug MG1 ausgegeben, z.B. durch Lautsprecherdurchsagen. Mit Vorteil erfolgt die Hot-Spot-Detektion so weit vor der Tunnelzufahrt, so dass eine Einfahrt des Zuges MG1 in den Tunnel noch verhindert werden kann.

Figur 2 zeigt ein zweites beispielhaftes Infrastrukturmanagementsystem zum Erkennen von Gefährdungspotentialen innerhalb einer Infrastruktur IS2 oder für eine Infrastruktur IS2. Bei der Infrastruktur IS2 handelt es sich gemäss Figur 2 um einen Tunnel für die Durchfahrt von Kraftfahrzeugen. Das zweite beispielhafte Infrastrukturmanagementsystem umfasst:
- eine dedizierte (z.B. statische, in der Infrastruktur verbaute oder angebrachte) Sensorik SK1" zum Erkennen von Gefährdungspotentialen innerhalb der Infrastruktur IS2 oder für die Infrastruktur IS2;
- ein Gateway G2 (z.B. Schnittstelle), eingerichtet zum Empfangen von Sensorwerten SW2, die von Sensoren SK2", SK2‴ mobiler Geräte MG2 - MG4 stammen, die sich temporär innerhalb der Infrastruktur IS2 oder innerhalb einer definierten Entfernung (z.B. innerhalb eines definierten Radius, oder innerhalb eines definierten Abstandes) zur Infrastruktur IS2 befinden;
- eine Verarbeitungseinheit VE2 (z.B. entsprechend eingerichteter Server), eingerichtet zum Empfangen der von der dedizierten Sensorik SK1" gemeldeten Sensorwerte SW1, und eingerichtet zum Empfangen der vom Gateway G2 bereitgestellten Sensorwerte SW2 der mobilen Geräte MG2 - MG4, und weiter eingerichtet zur Analyse der empfangenen Sensorwerte SW1, SW2, um Gefährdungspotentiale für die Infrastruktur IS2 oder innerhalb der Infrastruktur IS2 zu erkennen.

Bei der Darstellung gemäss Figur 2 handelt es sich bei den mobilen Geräten MG2 - MG4 um Kraftfahrzeuge und bei der Infrastruktur IS2 um einen Tunnel, in den die Kraftfahrzeuge MG2 - MG4 einfahren. Beispielhaft und nicht einschränkend sind in der Darstellung gemäss Figur 2 das Fahrzeug MG3 mit der Sensorik SK2" und das Fahrzeug MG4 mit der Sensorik SK2‴ ausgestattet. Bei dieser den jeweiligen Fahrzeugen zugeordneten Sensorik SK2", SK2‴ kann es sich z.B. um Temperatursensoren oder um Kameras handeln. Wenn die Fahrzeuge MG3, MG4 sich dem Tunnel IS2 nähern, werden sie ab einer bestimmten Entfernung zum Tunnel IS2 (z.B. ab 300m) in das Infrastrukturmanagementsystems des Tunnels IS2 eingebunden, und es werden die von der Sensorik SK2", SK2‴ gelieferten Sensorwerte SW2 zusammen mit der im Tunnel vorhandenen verbauten Sensorik SK1" (z.B. ein Brand- oder ein Gasdetektor) von der Verarbeitungseinheit VE2 des Infrastrukturmanagementsystems für den Tunnel IS2 verwendet, um Gefährdungspotentiale oder Gefahren für den Tunnel IS2 zu entdecken.

Mit Vorteil ist das Gateway G2 (z.B. Funkschnittstelle mit entsprechender Software) eingerichtet zum Empfangen von Sensorwerten SW2, die von Sensoren mobiler Geräte MG3, MG4 (z.B. Kraftfahrzeuge) stammen, die sich temporär innerhalb der Infrastruktur IS2 (z.B. Tunnel) oder innerhalb einer definierten Entfernung (z.B. Radius) zur Infrastruktur IS2 befinden; und weiter eingerichtet zum Weiterleiten der empfangenen Sensorwerte SW2 an die Verarbeitungseinheit VE2, zum Analysieren der Sensorwerte SW2 und SW1 um Gefährdungspotential für die Infrastruktur IS2 zu erkennen.

Mit Vorteil ist das Gateway G2 weiter eingerichtet, Meldungen von einem Vehicle-to-Vehicle-Server VSV-S und/oder von einem Verkehrsleitrechner LS2 zu empfangen und an die Verarbeitungseinheit VE2 weiterzuleiten. Mit Vorteil werden die Meldungen M über eine Funkschnittstelle beim Gateway G2 empfangen.

Mit Vorteil umfasst die Verarbeitungseinheit VE2 entsprechend eingerichtete Hardware (z.B. Prozessor P2, Speicher SP2) und Software, um Methoden der künstlichen Intelligenz (z.B. Entscheidungstabellen, Erfahrungsdatenbank, neuronale Modelle oder Netze, selbstlernende Systeme, Deep Learning) zu verwenden, um Gefahren oder Gefährdungspotentiale für den Tunnel möglichst schnell zu erkennen und entsprechende Massnahmen (mit Vorteil vorbeugende Massnahmen) einzuleiten. Bei den von der Verarbeitungseinheit VE2 eingeleiteten Massnahmen kann es sich um Aktionen A (z.B. Sperrung der Tunnelzufahrt; Benachrichtigung der Polizei bzw. Benachrichtigung von Sicherheitsorganen, und/oder einer Verkehrsleitstelle, und/oder Radiostation) und/oder um Warnmeldungen WM (z.B. Anzeige von einer Warn- oder Gefahrenmeldung auf einem Display an der Tunneleinfahrt) handeln. Mit Vorteil werden die Aktionen A und/oder die Warnmeldungen WM eingeleitet bzw. ausgegeben.

Mit Vorteil werden zum Erkennen von Gefährdungspotentialen für die Infrastruktur IS2 oder innerhalb der Infrastruktur IS2 auch Meldungen M verwendet, die von einem Vehicle-to-Vehicle-Server V"V-S und/oder von einem Verkehrsleitrechner LS2 bereitgestellt werden.

Optional werden zum Erkennen von Gefährdungspotentialen für die Infrastruktur IS2 oder innerhalb der Infrastruktur IS2 auch Meldungen M verwendet, die von einem Fahrzeug MG2 - MG4 bereitgestellt werden, welches mit anderen Fahrzeugen MG2 - MG4 vernetzt ist.

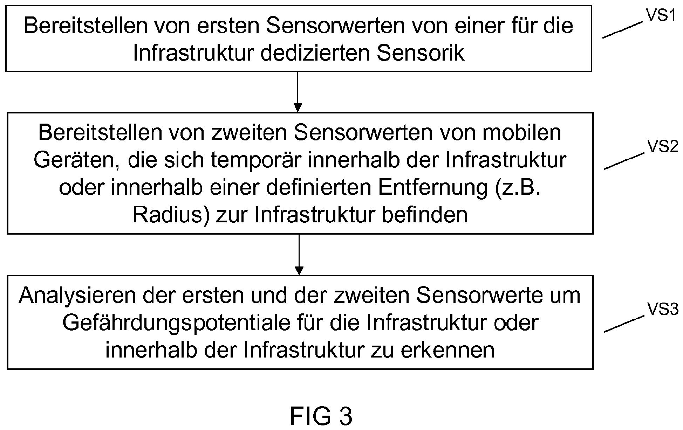

Figur 3 zeigt ein beispielhaftes Flussdiagramm für ein Verfahren zum Erkennen von Gefährdungspotentialen innerhalb einer Infrastruktur oder für eine Infrastruktur (z.B. Tunnel, Fähre, Parkgarage). Das Verfahren umfasst die folgenden Verfahrensschritte:
(VS1) Bereitstellen von ersten Sensorwerten von einer für die Infrastruktur dedizierten (statischen, verbauten) Sensorik;
(VS2) Bereitstellen von zweiten Sensorwerten von mobilen Geräten, die sich temporär innerhalb der Infrastruktur oder innerhalb einer definierten Entfernung (Radius) zur Infrastruktur befinden; und
(VS3) Analysieren der ersten und der zweiten Sensorwerte um Gefährdungspotentiale für die Infrastruktur oder innerhalb der Infrastruktur zu erkennen. Die in Infrastrukturen (z.B. Parkgaragen, Fähren, Tunnel) vorhandene und meistens statisch verbaute Sensorik (z.B. Kameras, Temperatursensoren, Rauchsensoren) zur Erkennung von Gefahren wird mit Sensorik von mobilen Geräten (z.B. Kraftfahrzeuge, Züge), die sich nur temporär in der Infrastruktur befinden oder sich der Infrastruktur annähern (z.B. Zug oder Kfz fährt durch Tunnel) temporär erweitert, um Gefährdungspotentiale für die Infrastruktur schneller zu erkennen. Dadurch wird u.a. das Reaktionszeitfenster vergrössert, um auf erkannte potentielle Gefährdungen oder Gefahren schnell zu reagieren. Mobilen Sensoren, die nicht zum festinstallierten Sensorinventars (z.B. Rauchmelder der Brandmeldeanlange) der Infrastruktur gehören und sich nur temporär um oder in der Infrastruktur befinden, werden zur Risikominimierung der Infrastruktur mit der in der Infrastruktur vorhandenen dedizierten Sensorik kooperativ verwendet und es werden ihre Sensorwerte zum Erkennen von Gefährdungspotentialen verwendet. Die vorliegende Erfindung ermöglicht eine Augmentierung der für eine Infrastruktur vorhandenen Sensorik durch eine mobile bzw. temporäre Sensorik der mobilen Geräte. Mit Vorteil erfolgt das Bereitstellen der Sensorwerte durch geeignete Funkverbindungen, wobei die ersten Sensorwerte, die von der in Infrastruktur verbauten Sensorik (z.B. Brand- und/oder Rauchmelder in einem Tunnel) stammen, auch drahtgebunden bereitgestellt werden können.

Das Analysieren der ersten und der zweiten Sensorwerte, um Gefährdungspotentiale für die Infrastruktur oder innerhalb der Infrastruktur zu erkennen, erfolgt über geeignete Hardware (Computer, Speicher, Kommunikationsverbindungen) und Software (z.B. Programme der künstlichen Intelligenz, Deep Learning Algorithmen, Entscheidungstabellen basierend auf Erfahrungswerten, etc).

Mit Vorteil werden beim Erkennen von Gefahren oder Gefährdungspotentialen automatisch entsprechende und auf die jeweilige Gefährdung abgestimmte Aktionen ausgelöst (z.B. Ausgabe von Warnmeldungen, Schliessen der Zufahrtswege zur Infrastruktur, etc).

Die zweiten Sensorwerte können von einem Fahrzeug (Zug, Kraftfahrzeug) und/oder von einem mobilen Kommunikationsendgerät (z.B. Smartphone) bereitgestellt werden.

Mit Vorteil werden zum Erkennen von Gefährdungspotentialen für die Infrastruktur oder innerhalb der Infrastruktur auch Meldungen verwendet, die von einem Vehicle-to-Vehicle-Server und/oder von einem Verkehrsleitrechner bereitgestellt werden. Z.B. Meldungen über einen LKW mit Gefahrengütern, der sich der Infrastruktur nähert.

Mit Vorteil werden zum Erkennen von Gefährdungspotentialen für die Infrastruktur oder innerhalb der Infrastruktur auch Meldungen verwendet, die von einem mobilen Gerät (insbesondere Fahrzeug) bereitgestellt werden, welches mit anderen mobilen Geräten (insbesondere Fahrzeugen) vernetzt ist, z.B. durch eine car-to-car (C2C)- bzw. vehicle-to-vehicle (V2V)-Verbindung. Die Verbindung der Fahrzeuge untereinander bzw. mit dem Infrastrukturmanagementsystem kann z.B. GSM-basiert, WLAN-basiert, oder UMTS-basiert erfolgen.

Mobile Objekte (z.B. Fahrzeuge, Züge) in/an/um Infrastrukturen (z.B. Tunnel, Fähren, Parkhäuser, Gebäude, Campusareale) haben meist eine eigene Vielzahl an Sensoren. Diese beweglichen Sensoren, die nicht zur Infrastruktur gehören, werden bislang nicht genutzt, um Infrastrukturen optimierter zu schützen. Ziel der vorliegenden Erfindung ist es, diese temporären mobilen Sensoren außerhalb des in der Infrastruktur festinstallierten Sensorinventars (z.B. Rauchmelder der Brandmeldeanlange) kooperativ mit zu verwenden, und deren Fähigkeiten zur Risikominimierung der Infrastruktur zu nutzen. Damit die Sensormesswerte der kooperierenden nicht-zur-Infrastrukturgehörenden Objekte genutzt werden können, ist eine Datenverbindung notwendig. Dies kann mit Vorteil eine drahtlose Verbindung sein, kann jedoch auch eine kabelverbunden realisiert werden (Beispiel: mittels Ladekabel verbundene Elektrofahrzeuge, welche eine zur Infrastruktur gehörende Ladeeinrichtung nutzen, welche wiederum mit der Infrastruktur oder beauftragten Dienstleister kommunizieren kann).

Mit Vorteil umfasst die Infrastruktur bzw. das Infrastrukturmanagementsystem ein Gateway, z.B. ein "Alarmnachrichtengateway". Dieses kann auf diversen Verbindungsebenen Warn- / Alarmmeldungen unterschiedlichster Sensoren und/oder Nachrichtenkanäle (z.B. Twitter oder SMS) empfangen. Dieses Gateway kann die eingehenden Daten optional via Analyse auf einem oder mehreren Servern auf Plausibilität überprüfen und analysieren lassen. Der oder die Server (Verarbeitungseinheit bzw. Verarbeitungseinheiten) können lokal in der Infrastruktur bzw. in einem Rechenzentrum der/für die Infrastruktur oder "in der cloud" disloziert sein. Mit Vorteil werden bei der Analyse der Sensorwerte Erfahrungswerte, Reputation, Korrelation zu anderen aufgelaufenen Sensorwerten berücksichtigt.

Opional übermittelt das Gateway wiederum Daten (wie z.B. Auswertung und/oder Handlungsempfehlungen und/oder Aktionsbefehle) an zur Infrastruktur (z.B. Gebäude / Campus Areal) gehörenden Management Station Software und/oder designierte Personen (z.B. Sprachnachricht auf das Telefon; push-Meldung auf das Smartphone).

Beispiel:
Elektrisch-betriebene Fahrzeuge, z.B. Nahverkehrsbusse oder auch Personenkraftwagen, oder selbst Elektrofahrräder, werden nach Fahrtende üblicherweise in einer Einstellhalle (Garage) abgestellt. Bisher wurde ein von diesen Fahrzeugen ausgehendes Gefährdungsrisiko erst erkannt, wenn es bereits zu spät war:
ein in der Einstellhalle installierter Rauchmelder detektierte einen Fahrzeugbrand und alarmierte.

Nun: Durch die Nutzung von Alarmierungsnotifikationen auf Fahrzeugseite kann unter Nutzung des in der Erfindung beschriebenen Verfahrens vor dem Fahrzeugbrand agiert werden. Das Fahrzeug (bzw. dessen Batterie Management System (BMS)) erkennt z.B. eine zu hohe Volt-Zahl in Zellen der Batterie. Dies könnte zu einem Brand führen. Noch bevor es brennt, wird erkannt, dass es brennen könnte. Der beste Zeitpunkt zu reagieren. Ein Kommunikationsmodul im Fahrzeug meldet das durch das BMS erkannte Gefährdungsrisiko und die Unregelmäßigkeit der Messwerte an einen oder mehrere Empfänger. Dies kann der Fahrzeughersteller oder beauftragter Service-Anbieter sein, welcher die Gefahrenmeldung zielgerichtet (die Position des Fahrzeuges ist meist bekannt (z.B. durch GPS-Ortung)) an die vor Ort befindliche Alarmierungs-/Einsatzinfrastruktur weiterleitet (daraufhin könnte z.B. die Infrastruktur-Brandmeldeanlage einen Vor-Alarm aktivieren und/oder den entsprechenden Brandabschnitt durch bauliche Brandschutzeinrichtungen isolieren).

Mit Vorteil wird vor Weitergabe der erkannten Messwerte eine Datenauswertung durchgeführt und z.B. mit Erfahrungswerten verglichen, um die Gefahr einer Fehlalarmierung zu begrenzen. Die Auswertung kann im Fahrzeug selbst und/oder idealerweise auf einem oder mehreren Servern außerhalb des Fahrzeuges stattfinden. Eine direkte Kommunikationskopplung von (in diesem Beispiel) Fahrzeug an die vor Ort befindliche Alarmierungseinrichtung bzw. Infrastruktur/Gebäudemanagementsystem, ist ebenfalls möglich. D.h. das Fahrzeug meldet sich bei Einfahrt direkt am System an bzw. bei Ausfahrt wieder ab.

Die Vorteile der Erfindung sind insbesondere:
- Ein Infrastruktur- bzw. Gebäude-Management-System erfährt über sich ändernde Gefährdungspotentiale (z.B. hinzukommende oder nicht mehr präsente Elektrofahrzeuge) und kann entsprechende Vorkehrungen treffen (z.B. dynamische Fluchtwegberechnung auf Grund von erhöhtem Gefährdungsrisiko in Zone X).
- Direkte Alarmierung durch statische oder dynamische Objekte, welche eine Gefahr "von sich" aus erkennen und entsprechend kommunizieren.
- Nutzung der in diesen Objekten enthaltener Sensorik zur Augmentierung der Infrastruktursensorik (z.B. Einbindung der in Fahrzeugen befindlichen Kameras in das Videoüberwachungssystem der Infrastruktur; z.B. Nutzung von Luftqualitätsmesssensoren)
- Nutzung der in diesen Objekten enthaltenen technischen Einrichtungen zur Ergänzung der in der Infrastruktur vorhandener technischer Einrichtung (z.B. Einbindung der Fahrzeugbeleuchtung und Audiosystem/Hupe zur Augmentierung der Warneinrichtungen der Infrastruktur.
- Einbinden von z.B. vorhandenen mobilen Rauchmeldern (z.B. solche in Zügen oder Linienbussen) in die vorhandene Sicherheitsinfrastruktur, sobald diese Sensoren in Reichweite der Infrastruktur gelangen. Dabei wird ein solcher Detektor als "dazugehöriger" Sensor mit in die existierende Anlage eingebunden (virtuelle Melderlinie). Dadurch kann z.B. weiterhin eine Cloud-Lösung wie MindSphere generell als virtuelle Gefahrenmeldeanlage agieren, unter Nutzung der dafür vorgesehenen verbundenen Detektoren bzw. Sensoren.

Infrastrukturmanagementsystem und Verfahren zum Erkennen von Gefährdungspotentialen innerhalb der Infrastruktur oder für die Infrastruktur, wobei eine dedizierte Sensorik zum Erkennen von Gefährdungspotentialen innerhalb der Infrastruktur oder für die Infrastruktur bereitgestellt wird; wobei ein Gateway (z.B. Schnittstelle) bereitgestellt wird, welches eingerichtet ist zum Empfangen von Sensorwerten, die von Sensoren mobiler Geräte stammen, die sich temporär innerhalb der Infrastruktur oder innerhalb einer definierten Entfernung (Radius) zur Infrastruktur befinden; wobei eine Verarbeitungseinheit (z.B. Server) bereitgestellt wird, welcher eingerichtet ist zum Empfangen der von der dedizierten Sensorik gemeldeten Sensorwerte, und eingerichtet ist zum Empfangen der vom Gateway bereitgestellten Sensorwerte der mobilen Geräte, und weiter eingerichtet zur Analyse der empfangenen Sensorwerte, um Gefährdungspotentiale für die Infrastruktur oder innerhalb der Infrastruktur zu erkennen.

### Bezugszeichen

- IS1, IS2: Infrastruktur
- MG1 - MG4: Mobiles Gerät
- SK1, SK1', SK1": Dedizierte Sensorik für die Infrastruktur
- SK2, SK2', SK2", SK2‴: Sensorik
- SW1, SW2: Sensorwert
- VE1, VE2: Verarbeitungseinheit
- G1, G2: Gateway
- P1, P2: Prozessor
- SP1, SP2: Speicher
- A: Aktion
- WM: Warnmeldung
- M: Meldung
- V2V-S: Vehicle-to-Vehicle-Server
- LS1, LS2: Leitstelle
- VS1 - VS3: Verfahrensschritt

## Patentansprüche

1. Infrastrukturmanagementsystem zum Erkennen von Gefährdungspotentialen innerhalb einer Infrastruktur (IS1, IS2) oder für eine Infrastruktur (IS1, IS2), das Infrastrukturmanagementsystem umfassend:
dedizierte Sensorik (SK1, SK1', SK1") zum Erkennen von Gefährdungspotentialen innerhalb der Infrastruktur (IS1, IS2) oder für die Infrastruktur (IS1, IS2);
ein Gateway (G1, G2), eingerichtet zum Empfangen von Sensorwerten (SW2), die von Sensoren (SK2, SK2', SK2", SK2‴) mobiler Geräte (MG1 - MG4) stammen, die sich temporär innerhalb der Infrastruktur (IS1, IS2) oder innerhalb einer definierten Entfernung zur Infrastruktur (IS1, IS2) befinden, wobei die Sensoren (SK2, SK2', SK2", SK2‴) der mobilen Geräte (MG1 - MG4) nicht zur Infrastruktur gehören;
eine Verarbeitungseinheit (VE1, VE2), eingerichtet zum Empfangen der von der dedizierten Sensorik (SK1, SK1', SK1") gemeldeten Sensorwerte (SW1), und eingerichtet zum Empfangen der vom Gateway (G1, G2) bereitgestellten Sensorwerte (SW2) der mobilen Geräte (MG1 - MG4), und weiter eingerichtet zur Analyse der empfangenen Sensorwerte (SW1) und Sensorwerte (SW2), um Gefährdungspotentiale für die Infrastruktur (IS1, IS2) oder innerhalb der Infrastruktur (IS1, IS2) zu erkennen,
wobei es sich bei den mobilen Geräten (MG1 - MG4) um Kraftfahrzeuge, insbesondere um Autos oder Lastkraftwagen, handelt,
wobei es sich bei den Sensoren (SK2, SK2', SK2", SK2‴) der mobilen Geräte (MG1 - MG4) um Rauchmelder, Kameras oder Temperatursensoren handelt, die mit der dedizierten Sensorik (SK1, SK1', SK1") der Infrastruktur (IS1, IS2) zum Erkennen von Gefährdungspotentialen kooperativ verwendet werden.

2. System nach Anspruch 1, wobei die mobilen Geräte (MG1 - MG4) eingerichtet sind, dass sie sich automatisch mit dem Gateway verbinden, wenn sie sich innerhalb der Infrastruktur (IS1, IS2) oder innerhalb einer definierten Entfernung (Radius) zur Infrastruktur (IS1, IS2) befinden.

3. System nach Anspruch 1, wobei die mobilen Geräte (MG1 - MG4) eingerichtet sind, dass sie sich erst nach einer geräteseitig erfolgten Bestätigung mit dem Gateway (G1, G2) verbinden.

4. System nach Anspruch 1 oder 3, wobei eine Verbindung zwischen Gateway (G1, G2) und einem mobilen Gerät (MG1 - MG4) erst nach einer Bestätigung durch das Gateway (G1, G2) erfolgt.

5. System nach einem der vorstehenden Ansprüche, wobei es sich bei der Infrastruktur (IS1, IS2) um einen Tunnel, ein Parkhaus, eine Tiefgarage, eine Parkgarage, einen Campus oder eine Fähre handelt.

6. System nach einem der vorstehenden Ansprüche,
wobei das Gateway (G1, G2) dazu eingerichtet ist, Meldungen (M) von einem Vehicle-to-Vehicle-Server und/oder von einem Verkehrsleitrechner (LS1, LS2) zu empfangen, und
wobei die Verarbeitungseinheit (VE1, VE2) dazu eingerichtet ist, die vom Vehicle-to-Vehicle-Server (V2V-S) oder vom Verkehrsleitrechner (LS1, LS2) empfangenen Meldungen (M) bei der Analyse des Gefährdungspotentials für die Infrastruktur (IS1, IS2) oder innerhalb der Infrastruktur (IS1, IS2) zu berücksichtigen.

7. Gateway (Schnittstelle), eingerichtet zum Empfangen von Sensorwerten (SW2), die von Sensoren (SK2, SK2', SK2", SK2‴) mobiler Geräte (MG1 - MG4) stammen, die sich temporär innerhalb einer Infrastruktur (IS1, IS2) oder innerhalb einer definierten Entfernung zur Infrastruktur (IS1, IS2) befinden, wobei die Sensoren (SK2, SK2', SK2", SK2‴) der mobilen Geräte (MG1 - MG4) nicht zur Infrastruktur gehören; und weiter eingerichtet zum Weiterleiten der empfangenen Sensorwerte (SW2) an eine Verarbeitungseinheit (VE1, VE2), wobei es sich bei den mobilen Geräten (MG1 - MG4) um Kraftfahrzeuge, insbesondere um Autos oder Lastkraftwagen, handelt,
wobei es sich bei den Sensoren (SK2, SK2', SK2", SK2‴) der mobilen Geräte (MG1 - MG4) um Rauchmelder, Kameras oder Temperatursensoren handelt, die mit der dedizierten Sensorik (SK1, SK1', SK1") der Infrastruktur (IS1, IS2) zum Erkennen von Gefährdungspotentialen kooperativ verwendet werden.

8. Gateway (Schnittstelle) nach Anspruch 7, weiter eingerichtet, Meldungen (M) von einem Vehicle-to-Vehicle-Server (V2VS-S) und/oder von einem Verkehrsleitrechner (LS1, LS2) zu empfangen und an die Verarbeitungseinheit (VE1, VE2) weiterzuleiten.

9. Verfahren zum Erkennen von Gefährdungspotentialen innerhalb einer Infrastruktur (IS1, IS2) oder für eine Infrastruktur (IS1, IS2), das Verfahren umfassend:
Bereitstellen von ersten Sensorwerten (SW1) von einer für die Infrastruktur dedizierten Sensorik (SK1, SK1', SK1‴);
Bereitstellen von zweiten Sensorwerten (SW2) von mobilen Geräten (MG1 - MG4), die sich temporär innerhalb der Infrastruktur (IS1, IS2) oder innerhalb einer definierten Entfernung zur Infrastruktur (IS1, IS2) befinden, wobei die zweiten Sensorwerte (SW2) von Sensoren (SK2, SK2', SK2", SK2‴) mobiler Geräte (MG1 - MG4) stammen, nicht zur Infrastruktur gehören; und
kooperatives Verwenden und Analysieren der ersten und der zweiten Sensorwerte (SW1, SW2), um Gefährdungspotentiale für die Infrastruktur (IS1, IS2) oder innerhalb der Infrastruktur (IS1, IS2) zu erkennen, wobei es sich bei den mobilen Geräten (MG1 - MG4) um Kraftfahrzeuge, insbesondere um Autos oder Lastkraftwagen, handelt,
wobei die zweiten Sensorwerte (SW2) von Rauchmeldern, Kameras oder Temperatursensoren der mobilen Geräte (MG1 - MG4) bereitgestellt werden.

10. Verfahren nach Anspruch 9, wobei zum Erkennen von Gefährdungspotentialen für die Infrastruktur (IS1, IS2) oder innerhalb der Infrastruktur (IS1, IS2) auch Meldungen berücksichtigt werden, die von einem Vehicle-to-Vehicle-Server (V2V-S) und/oder von einem Verkehrsleitrechner (LS1, LS2) bereitgestellt werden.

11. Verfahren nach einem der Ansprüche 9 oder 10, wobei zum Erkennen von Gefährdungspotentialen für die Infrastruktur (IS1, IS2) oder innerhalb der Infrastruktur (IS1, IS2) auch Meldungen berücksichtigt werden, die von einem mobilen Gerät (MG1 - MG4) bereitgestellt werden, welches mit anderen mobilen Geräten (MG1 - MG4) vernetzt ist.

## Claims

1. Infrastructure management system for identifying risk potentials within an infrastructure (IS1, IS2) or for an infrastructure (IS1, IS2), the infrastructure management system comprising:
a dedicated sensor system (SK1, SK1', SK1") for identifying risk potentials within the infrastructure (IS2, IS2) or for the infrastructure (IS1, IS2);
a gateway (G1, G2) designed so as to receive sensor values (SW2) that originate from sensors (SK2, SK2', SK2", SK2‴) of mobile devices (MG1 - MG4) that are temporarily located within the infrastructure (IS1, IS2) or within a defined range from the infrastructure (IS1, IS2), wherein the sensors (SK2, SK2', SK2", SK2‴) of the mobile devices (MG1 - MG4) do not belong to the infrastructure;
a processing unit (VE1, VE2) designed so as to receive the sensor values (SW1) that are reported by the dedicated sensor system (SK1, SK1', SK1"), and designed so as to receive the sensor values (SW2) of the mobile devices (MG1 - MG4) that are provided by the gateway (G1, G2), and further designed so as to analyse the received sensor values (SW1) and sensor values (SW2) in order to identify risk potentials for the infrastructure (IS1, IS2) or within the infrastructure (IS1, IS2),
wherein the mobile devices (MG1 - MG4) are motor vehicles, in particular cars or trucks,
wherein the sensors (SK2, SK2', SK2", SK2‴) of the mobile devices (MG1 - MG4) are smoke detectors, cameras or temperature sensors, which are used in a cooperative manner with the dedicated sensor system (SK1, SK1', SK1") of the infrastructure (IS1, IS2) for identifying risk potentials.

2. System according to claim 1, wherein the mobile devices (MG1 - MG4) are designed such that they automatically connect to the gateway if they are located within the infrastructure (IS1, IS2) or within a defined range (radius) from the infrastructure (IS1, IS2).

3. System according to claim 1, wherein the mobile devices (MG1 - MG4) are designed such that they only connect to the gateway (G1, G2) after the device has provided confirmation.

4. System according to claim 1 or 3, wherein a connection between the gateway (G1, G2) and a mobile device (MG1 - MG4) only takes place after confirmation by the gateway (G1, G2).

5. System according to one of the preceding claims, wherein the infrastructure (IS1, IS2) is a tunnel, a multi-level parking lot, an underground garage, a parking garage, a campus or a ferry.

6. System according to one of the preceding claims,
wherein the gateway (G1, G2) is designed so as to receive notifications (M) from a vehicle-to-vehicle server and/or from a traffic management computer (LS1, LS2), and
wherein the processing unit (VE1, VE2) is designed, during the analysis of the risk potential for the infrastructure (IS1, IS2) or within the infrastructure (IS1, IS2), to take into consideration the notifications (M) that are received from the vehicle-to-vehicle server (V2V-S) or from the traffic management computer (LS1, LS2).

7. Gateway (interface) designed so as to receive sensor values (SW2) that originate from sensors (SK2, SK2', SK2", SK2‴) of mobile devices (MG1 - MG4) that are temporarily located within an infrastructure (IS1, IS2) or within a defined range from the infrastructure (IS1, IS2), wherein the sensors (SK2, SK2', SK2", SK2‴) of the mobile devices (MG1 - MG4) do not belong to the infrastructure; and further designed so as to transmit the received sensor values (SW2) to a processing unit (VE1, VE2), wherein the mobile devices (MG1 - MG4) are motor vehicles, in particular cars or trucks,
wherein the sensors (SK2, SK2', SK2", SK2‴) of the mobile devices (MG1 - MG4) are smoke detectors, cameras or temperature sensors, which are used in a cooperative manner with the dedicated sensor system (SK1, SK1', SK1") of the infrastructure (IS1, IS2) for identifying risk potentials.

8. Gateway (interface) according to claim 7, further designed to receive notifications (M) from a vehicle-to-vehicle server (V2V-S) and/or from a traffic management computer (LS1, LS2) and to transmit said notifications to the processing unit (VE1, VE2).

9. Method for identifying risk potentials within an infrastructure (IS1, IS2) or for an infrastructure (IS1, IS2), the method comprising:
providing first sensor values (SW1) from a sensor system (SK1, SK1', SK1") that is dedicated to the infrastructure;
providing second sensor values (SW2) from mobile devices (MG1 - MG4) that are temporarily located within the infrastructure (IS1, IS2) or within a defined range from the infrastructure (IS1, IS2), wherein the second sensor values (SW2) originate from sensors (SK2, SK2', SK2", SK2‴) of mobile devices (MG1 - MG4) and do not belong to the infrastructure; and
cooperatively using and analysing the first and the second sensor values (SW1, SW2) in order to identify risk potentials for the infrastructure (IS1, IS2) or within the infrastructure (IS1, IS2), wherein the mobile devices (MG1 - MG4) are motor vehicles, in particular cars or trucks,
wherein the second sensor values (SW2) are provided by smoke detectors, cameras or temperature sensors of the mobile devices (MG1 - MG4).

10. Method according to claim 9, wherein notifications that are provided by a vehicle-to-vehicle server (V2V-S) and/or by a traffic management computer (LS1, LS2) are also taken into consideration for identifying risk potentials for the infrastructure (IS1, IS2) or within the infrastructure (IS1, IS2) .

11. Method according to one of claims 9 or 10, wherein notifications that are provided by a mobile device (MG1 - MG4), which is networked to other mobile devices (MG1 - MG4), are taken into consideration for identifying risk potentials for the infrastructure (IS1, IS2) or within the infrastructure (IS1, IS2).

## Revendications

1. Système de gestion d'infrastructure conçu pour détecter les risques potentiels à l'intérieur d'une infrastructure (IS1, IS2) ou pour une infrastructure (IS1, IS2), le système de gestion d'infrastructure comportant :
un système sensoriel (SK1, SK1', SK1") dédié pour détecter des risques potentiels à l'intérieur de l'infrastructure (IS1, IS2) ou pour l'infrastructure (IS1, IS2);
une passerelle (G1, G2), apte à recevoir des valeurs de capteur (SW2) provenant de capteurs (SK2, SK2', SK2", SK2‴) d'appareils mobiles (MG1 à MG4) se trouvant temporairement à l'intérieur de l'infrastructure (IS1, IS2) ou à l'intérieur d'une distance définie par rapport à l'infrastructure (IS1, IS2), les capteurs (SK2, SK2', SK2", SK2‴ des appareils mobiles (MG1 à MG4) ne faisant pas partie de l'infrastructure ;
une unité de traitement (VE1, VE2), configurée pour recevoir les valeurs de capteur (SW1) provenant du système sensoriel dédié (SK1, SK1', SK1") et configurée pour recevoir les valeurs de capteur (SW2) mises à disposition par la passerelle (G1, G2) des appareils mobiles (MG1 à MG4), et configurée par ailleurs pour analyser les valeurs de capteur (SW1) et valeurs de capteur (SW2) reçues pour détecter des risques potentiels pour l'infrastructure (IS1, IS2) ou à l'intérieur de ladite infrastructure (IS1, IS2), les appareils mobiles (MG1 à MG4) étant des véhicules automobiles, notamment des voitures ou des poids lourds,
les capteurs (SK2, SK2', SK2", SK2‴) des appareils mobiles (MG1 à MG4) étant des détecteurs de fumée, des caméras ou des capteurs de température utilisés de manière coopérative avec les systèmes sensoriels (SK1, SK1', SK1") de l'infrastructure (IS1, IS2) pour détecter des risques potentiels.

2. Système selon la revendication 1, dans lequel les appareils mobiles (MG1 à MG4) sont configurés pour se connecter automatiquement avec la passerelle lorsqu'ils se trouvent à l'intérieur de l'infrastructure (IS1, IS2) ou à l'intérieur d'une distance définie (rayon) par rapport à l'infrastructure (IS1, IS2).

3. Système selon la revendication 1, dans lequel les appareils mobiles (MG1 à MG4) sont conçus pour se connecter avec la passerelle (G1, G2) seulement après une confirmation de la part des appareils.

4. Système selon la revendication 1 ou 3, dans lequel la connexion entre la passerelle (G1, G2) et un appareil mobile (MG1 à MG4) ne se fait qu'après confirmation par la passerelle (G1, G2).

5. Système selon l'une des revendications précédentes, dans lequel, quant à l'infrastructure (IS1, IS2), il s'agit d'un tunnel, d'un garage de stationnement, d'un garage souterrain, d'un campus ou d'un ferry.

6. Système selon l'une des revendications précédentes, dans lequel la passerelle (G1, G2) est conçue pour recevoir des messages (M) de la part d'un serveur de communication de véhicule à véhicule et/ou d'un ordinateur de régulation du trafic (LS1, LS2), et
l'unité de traitement (VE1, VE2) est configurée pour prendre en compte les messages (M) reçus de la part du serveur de communication de véhicule à véhicule (V2V-S) ou de l'ordinateur de régulation du trafic (LS1, LS2) lors de l'analyse des risques potentiels pour l'infrastructure (IS1, IS2) ou à l'intérieur de l'infrastructure (IS1, IS2).

7. Passerelle, configurée pour recevoir des valeurs de capteur (SW2) provenant de capteurs (SK2, SK2', SK2", SK2‴) d'appareils mobiles (MG1 à MG4) se trouvant temporairement à l'intérieur d'une infrastructure (IS1, IS2) ou à l'intérieur d'une distance définie par rapport à l'infrastructure (IS1, IS2), les capteurs (SK2, SK2', SK2", SK2‴) des appareils mobiles (MG1 à MG4) ne faisant pas partie de l'infrastructure; et par ailleurs configurée pour retransmettre les valeurs de capteur (SW2) reçues à une unité de traitement (VE1, VE2),
les appareils mobiles (MG1 à MG4) étant des véhicules automobiles, notamment des voitures ou poids lourds, les capteurs (SK2, SK2', SK2", SK2‴) des appareils mobiles (MG1 à MG4) étant des détecteurs de fumée, des caméras ou des capteurs de température utilisés de manière coopérative avec le système sensoriel (SK1, SK1', SK1") de l'infrastructure (IS1, IS2) pour détecter les risques potentiels.

8. Passerelle selon la revendication 7, par ailleurs conçue pour recevoir des messages (M) provenant d'un serveur de communication de véhicule à véhicule (V2VS-S) et/ou d'un ordinateur de régulation du trafic (LS1, LS2) et de les retransmettre à l'unité de traitement (VE1, VE2).

9. Procédé de détection des risques potentiels à l'intérieur d'une infrastructure (IS1, IS2) ou pour une infrastructure (IS1, IS2), le procédé comportant les étapes suivantes:
mise à disposition de premières valeurs de capteur (SW1) par un système sensoriel dédié à l'infrastructure (SK1, SK1', SK1" );
mise à disposition de deuxièmes valeurs de capteur (SW2) d'appareils mobiles (MG1 à MG4) se trouvant temporairement a l'intérieur de l'infrastructure (IS1, IS2) ou à l'intérieur d'une distance définie par rapport à l'infrastructure (IS1, IS2), les deuxièmes valeurs de capteur (SW2) provenant de capteurs (SK2, SK2', SK2", SK2‴) d'appareils mobiles (MG1 à MG4) qui ne font pas partie de l'infrastructure ; et
utilisation coopérative et analyse des premières et deuxièmes valeurs de capteur (SW1, SW2) pour détecter les risques potentiels pour l'infrastructure (IS1, IS2) ou à l'intérieur de l'infrastructure (IS1, IS2), les appareils mobiles (MG1 à MG4) étant des véhicules automobiles, notamment des voitures ou des poids lourds,
les deuxièmes valeurs de capteur (SW2) étant mises à disposition par des détecteurs de fumée, des caméras ou des capteurs de température des appareils mobiles (MG1 à MG4).

10. Procédé selon la revendication 9, dans lequel, pour détecter les risques potentiels pour l'infrastructure (IS1, IS2) ou à l'intérieur de l'infrastructure (IS1, IS2), les messages ayant été mis à disposition par un serveur de communication de véhicule à véhicule (V2V-S) et/ou un ordinateur de régulation du trafic (LS1, LS2) sont également pris en compte.

11. Procédé selon l'une des revendications 9 ou 10, dans lequel, pour détecter les risques potentiels pour l'infrastructure (IS1, IS2) ou à l'intérieur de l'infrastructure (IS1, IS2), des messages mis à disposition par un appareil mobile (MG1 à MG4) interconnecté avec d'autres appareils mobiles (MG1 à MG4) sont également pris en compte.
